# EUROPEAN PATENT SPECIFICATION

(11) **EP 3 481 010 B1**
(45) Date of publication and mention of the grant of the patent: **09.09.2020**
(21) Application number: 17844921.1
(22) Date of filing: 15.05.2017
(51) Int. Cl.: H04L 12/46, H04L 12/24, H04L 12/723, H04L 12/703

(54) **METHOD, RELATED DEVICE, AND SYSTEM FOR ESTABLISHING LABEL-SWITCHED PATH FOR VIRTUAL PRIVATE NETWORK**
VERFAHREN, ZUGEHÖRIGE VORRICHTUNG UND SYSTEM ZUM EINRICHTEN EINES MARKIERUNGSGESCHALTETEN PFADES FÜR EIN VIRTUELLES PRIVATES NETZWERK
PROCÉDÉ, DISPOSITIF ASSOCIÉ ET SYSTÈME D'ÉTABLISSEMENT DE TRAJET COMMUTÉ PAR ÉTIQUETTE POUR UN RÉSEAU PRIVÉ VIRTUEL

(30) Priority: 31.08.2016 CN 201610797343
(43) Date of publication of application: 08.05.2019
(73) Proprietor: Huawei Technologies Co., Ltd., Longgang District Shenzhen, Guangdong 518129 (CN)
(72) Inventor: ZHUANG, Shunwan, Shenzhen Guangdong 518129 (CN); CHEN, Shuanglong, Shenzhen Guangdong 518129 (CN); WU, Nan, Shenzhen Guangdong 518129 (CN); LI, Zhenbin, Shenzhen Guangdong 518129 (CN)
(74) Representative: Gill Jennings & Every LLP
(86) International application number: PCT/CN2017/084374
(87) International publication number: WO 2018/040614

(56) References cited:
- WO-A1-2015/000173
- CN-A- 102 546 433
- CN-A- 102 664 788
- CN-A- 103 326 915
- CN-A- 106 169 969
- US-A1- 2015 009 803
- US-A1- 2015 009 806
- US-A1- 2015 109 902
- US-A1- 2016 119 229
- US-B1- 8 259 564

## Description

### TECHNICAL FIELD

Embodiments of the present invention relate to the field of information technologies, and more specifically, to a method and a system for establishing a virtual private network label switched path, and a related device.

### BACKGROUND

A virtual private network (English: Virtual Private Network, VPN for short) is a dedicated network established on a public network. The VPN has advantages such as good privacy, high flexibility, and strong scalability. Therefore, increasingly more enterprises establish respective VPNs on the public network.

A multiprotocol label switching (English: Multiprotocol Label Switching, MPLS for short) VPN is a VPN technology based on an MPLS technology. For ease of description, all the following VPNs are VPNs based on the MPLS technology.

An MPLS VPN model usually includes the following three types of devices: a provider edge (English: Provider Edge, PE for short) device, a provider (English: Provider, P for short) device, and a customer edge (English: Customer Edge) device. The PE device and the P device are devices in a carrier network that provides a VPN service. The CE device is a device in a customer network that uses the VPN service. The customer network may further include another device, such as a terminal device.

A PE device through which data enters a VPN may be referred to as an ingress PE device. A PE device through which the data leaves the VPN may be referred to as an egress PE device. It may be understood that the ingress PE device and the egress PE device are related to a transmission direction of data. If data is transmitted in an opposite direction, the ingress PE device and egress PE device are interchanged.

When an egress PE device is faulty, data cannot be sent to a destination device. To avoid this case, two egress PE devices may be disposed, and the two egress PE devices may be separately referred to as a primary egress PE device and a secondary egress PE device. When the two egress PE devices both can normally work, data that enters a VPN from the ingress PE device may leave the VPN from the primary egress PE device. When the primary egress PE device cannot forward data, the data that enters the VPN from the ingress PE device may be switched to the secondary egress PE device to leave the VPN.

A currently used solution is to perform a large quantity of manual configurations on each egress PE device. After the configurations are completed, each egress PE device advertises a VPN route of the egress PE device. The ingress PE device may export the VPN route advertised by the egress PE device, to form a VPN route protection group. After the VPN route protection group is formed, the P device can send data between the P device and the ingress PE device to the secondary egress PE after perceiving that the primary egress PE device is faulty. After perceiving that the primary egress PE device is faulty, the ingress PE device switches to-be-sent data to the secondary egress PE. In the currently used technical solution, when an egress PE device is configured, an identity of the egress PE device is configured on the egress PE device (that is, whether the PE device is a primary egress PE device or a secondary egress PE device). In addition, an identity of an egress PE device is also configured on the ingress PE. However, the identity of the egress PE device configured on the ingress PE device may be different from the identity of the egress PE device configured on the egress PE device. Consequently, a VPN route protection group cannot be formed.

US 2016/119229 A1 discloses a network system that includes a first Egress PE1, a second Egress PE2, and an Ingress PE3, the PE1, PE2 separately communicate with a CE, and the PE1, PE2 are located in a same redundancy group, and are separately used as primary/backup devices; the PE1, PE2 separately generate a virtual node, where the virtual node has a global unique Router ID in the network system. The virtual node is used as a next hop node of the PE1, PE2; and the PE1, PE2 send link state information to the PE3, so that the PE3 obtains Router IDs of the PE1 and PE2, a Router ID of the virtual node, and the link state information of the PE1, PE2, and the PE1, PE2 separately allocate a first label to a FEC of a first VPN, and send the first label and the Router ID of the virtual node to the PE3.

US 8 259 564 B1 discloses techniques for protecting an endpoint of a label switched path. In one example, a system includes an ingress router, a primary egress router, backup router, and a point of local repair (PLR) router. The ingress router, the PLR router, and the first egress router form a first label switched path. The backup router provides protection for the primary egress router such that the backup router provides routing services for the first egress router when the first egress router is not available. The primary egress router and the backup router share an anycast IP address. The backup router advertises a route to reach the primary egress router, but upon receiving a packet intended for the primary egress router, the backup router identifies the destination of the packet and forwards the packet to the destination instead of the primary egress router along a different route.

US 2015/009806 A1 discloses a method comprising detecting, by a first provider edge router, a second provider edge router providing reachability to a prescribed destination address prefix via a protected next hop address; allocating, by the first provider edge router, a minor forwarding table associated with the second provider edge router and identifying a destination used by the second provider edge router for reaching the prescribed destination address prefix; and the first provider edge router sending repair information to a Border Gateway Protocol (BGP)-free core network router in the core network, the repair information enabling the BGP-free core network router to add a context label and reroute a received data packet to the first provider edge router if the second provider edge router is unavailable, the context label enabling the first provider edge router to identify the destination in the rerouted data packet for delivery to the destination address prefix.

US 2015/109902 A1 discloses a method comprising selecting, by an ingress provider edge router, one of first or second provider edge routers as a primary router for reaching a destination via a core network, and selecting the other of the first or second provider edge routers as a backup router for reaching the destination via the core network; and inserting, into an IPv6 data packet destined for the destination, a primary label assigned by the primary router and a repair label assigned by backup router, and an IPv6 extension header specifying first and second segment identifiers associated with the respective first and second provider edge routers and a protected flag that enables fast rerouting of the IPv6 data packet to the backup router if the primary router is unavailable.

US 2015/009803 A1 discloses a method comprising detecting, by a provider edge router configured for providing reachability for core network traffic to a prescribed destination address prefix, a backup provider edge router relative to the prescribed destination address prefix; allocating, by the provider edge router, a distinct protected next-hop address for reachability to at least the destination address prefix via the provider edge router; and sending via a core network, by the provider edge router, repair information for the prescribed destination address prefix to ingress provider edge routers and a BGP-free core network router in the core network, the repair information enabling the ingress provider edge routers to insert primary and backup switching labels into each data packet of the core network traffic enabling the BGP-free core network router to reroute the received packet to the backup provider edge router if the provider edge router is unavailable.

### SUMMARY

Embodiments of the present invention provide a method and a system for establishing a virtual private network label switched path, and a related device, so as to avoid performing a large quantity of configurations on an egress PE during establishment of a VPN LSP.

According to a first aspect, an embodiment of the present invention provides a method for establishing a VPN LSP, where the method includes: receiving, by a first PE device, protection information sent by a second PE device, where the protection information includes a virtual next hop vNH; and the first PE device is an egress PE device and the second PE device is an ingress PE device and the protection information further comprises identity indication information that is used to indicate that an identity of the first PE device is a primary egress PE device or a secondary egress PE device; and sending, by the first PE device, a VPN LSP establishment message to the second PE device, where the VPN LSP establishment message is used to instruct to establish a VPN LSP by using the vNH as a tail endpoint. In the technical solution, the first PE device is an egress PE device of the VPN LSP. The second PE device is an ingress PE device of the VPN LSP. In the technical solution, the egress PE device may establish the VPN LSP based on the vNH sent by the ingress PE device. This can avoid performing a large quantity of configurations on the egress PE during establishment of the VPN LSP.

With reference to the first aspect, in a first possible implementation of the first aspect, the protection information further includes a primary VPN label, the primary VPN label is a VPN label allocated by a primary egress PE device to a route destined for a destination customer edge CE device; and the method further includes: determining, by the first PE device based on the identity indication information, that the identity of the first PE device is the secondary egress PE device; and establishing, by the first PE device, a correlation relationship between a secondary VPN label and the primary VPN label, where the secondary VPN label is a VPN label allocated by the first PE device to the route destined for the destination CE. In the technical solution, the first PE device may determine that the identity of the first PE device is the secondary egress PE device. In this way, when the primary egress PE device is faulty, a traffic may be switched to the first PE device, and the first PE device may send a received packet to a destination CE device of the packet. In addition, the primary egress PE device and the secondary egress PE device are specified by the ingress PE device. This can prevent the primary egress PE device and the secondary egress PE device that are determined by the ingress PE device from differing from a primary egress PE device and a secondary egress PE device that are configured on the egress PE device.

With reference to the first possible implementation of the first aspect, in a second possible implementation of the first aspect, the establishing, by the first PE device, a correlation relationship between a secondary VPN label and the primary VPN label includes: generating, by the first PE device, a VPN label switching table, where the VPN label switching table is corresponding to the vNH, an incoming label in the VPN label switching table is the primary VPN label, and an outgoing label in the VPN label switching table is the secondary VPN label. In this way, the first PE device can directly determine, by querying the table, a secondary VPN label correlated with the primary VPN label.

With reference to the first possible implementation of the first aspect or the second possible implementation of the first aspect, in a third possible implementation of the first aspect, the identity indication information includes an Internet Protocol IP address of the secondary egress PE device; and the determining, by the first PE device based on the identity indication information, that the first PE device is the secondary egress PE device includes: when determining that the IP address of the secondary egress PE device is the same as an IP address of the first PE device, determining, by the first PE device, that the first PE device is the secondary egress PE device. In this way, the first PE device can directly determine, based on the IP address of the first PE device, whether the first PE device is the secondary egress PE device, and another identifier does not need to be allocated to the first PE device.

With reference to any one of the first possible implementation of the first aspect to the third possible implementation of the first aspect, in a fourth possible implementation of the first aspect, before the sending, by the first PE device, a VPN LSP establishment message to the second PE device, the method further includes: determining, by the first PE device, a first metric value, where the first metric value is greater than a second metric value, and the second metric value is determined by the primary egress PE device; and advertising, by the first PE device, the first metric value to the second PE device. In this way, if the primary egress PE device is not faulty, when determining a next-hop PE device of a received packet, a device in a carrier network in which the first PE device is located may directly determine, based on the metric value, to send the received packet to the primary egress PE device.

With reference to any one of the first aspect or the possible implementations of the first aspect, in a fifth possible implementation of the first aspect, before the receiving, by a first PE device, protection information sent by a second PE device, the method further includes: sending, by the first PE device, at least one IP address to the second PE device, where the vNH is an IP address in the at least one IP address. In the technical solution, the vNH is an IP address preset in the first PE device. In addition, an IP address that may be used as the vNH does not need to be set in the second PE device. In this way, setting in the second PE device can be simplified.

With reference to the first aspect, in a sixth possible implementation of the first aspect, the identity indication information is used to indicate that an identity of the first PE device is a primary egress PE device; and the method may further include: determining, by the first PE device, based on the identity indication information, that the first PE device is the primary egress PE device. In this way, the first PE device may serve as a primary egress PE device of the VPN LSP, and forward a received packet to a destination CE device of the packet.

With reference to the sixth possible implementation of the first aspect, in a seventh possible implementation of the first aspect, the identity indication information may include an IP address of the primary egress PE device, and when determining that an IP address of the first PE device is the same as the IP address of the primary egress PE device, the first PE device may determine that the identity of the first PE device is the primary egress PE device, and another identifier does not need to be allocated to the PE device.

With reference to the first possible implementation of the first aspect, in an eighth possible implementation of the first aspect, the identity indication information may include a first identifier, where the first identifier is used to indicate that a PE device that receives the identity indication information is the secondary egress PE device. A length of a field that carries the first identifier in the technical solution may be less than a length of a field used to carry an IP address. In this way, a length of a field of the identity indication information can be shortened.

With reference to the sixth possible implementation of the first aspect, in a ninth possible implementation of the first aspect, the identity indication information may include a second identifier, where the second identifier is used to indicate that a PE device that receives the identity indication information is the primary egress PE device. A length of a field that carries the second identifier in the technical solution may be less than a length of a field used to carry an IP address. In this way, a length of a field of the identity indication information can be shortened.

With reference to any one of the first aspect or the possible implementations of the first aspect, in a tenth possible implementation of the first aspect, the protection information is carried in a first Border Gateway Protocol BGP message.

With reference to the fifth possible implementation of the first aspect, in an eleventh possible implementation of the first aspect, the at least one IP address is carried in a second BGP message.

According to a second aspect, an embodiment of the present invention provides a method for establishing a VPN LSP, where the method includes: determining, by a second provider edge PE device, a virtual next hop vNH, the second PE device being an ingress device; sending, by the second PE device, protection information to a first PE device, the first PE device being an egress PE device, where the protection information includes the vNH and identity indication information that is used to indicate that an identity of the first PE device is a primary egress PE device or a secondary egress PE device; and receiving, by the second PE device, a VPN LSP establishment message advertised by the first PE device, where the VPN LSP establishment message is used to instruct to establish a VPN LSP by using the vNH as a tail endpoint. In the technical solution, the second PE device is an ingress PE device of the VPN LSP. In the technical solution, the second PE device may specify a vNH as a tail endpoint of a to-be-established VPN LSP, and send the vNH to a primary egress PE device and a secondary egress PE device of the to-be-established VPN LSP. In this way, without a need to perform a large quantity of configurations on the two PE devices, it can be ensured that vNHs used by the primary egress PE device and the secondary egress PE device during establishment of the VPN LSP are consistent.

With reference to the second aspect, the fact that the protection information further includes identity indication information, where the identity indication information is used to indicate that an identity of the first PE device is the primary egress PE device or the secondary egress PE device enables the first PE device to directly specify the primary egress PE device and the secondary egress PE device of the VPN LSP. This can prevent the primary egress PE device and the secondary egress PE device that are determined by the ingress PE device from differing from a primary egress PE device and a secondary egress PE device that are configured on the egress PE device.

In a first possible implementation of the second aspect, the protection information further includes a primary VPN label, and the primary VPN label is a VPN label allocated by the primary egress PE device to a route destined for a destination customer edge CE. In this way, the secondary egress PE device may generate a correlation relationship between the primary VPN label and a secondary VPN label based on the primary VPN label, to form a VPN LSP protection path.

With reference to the second aspect itself or the first possible implementation of the second aspect, in a second possible implementation of the second aspect, the identity indication information includes an IP address of the secondary egress PE device. In this way, the second PE device can directly indicate, based on an IP address of the first PE device, whether the first PE device is the secondary egress PE device, and another identifier does not need to be allocated to the first PE device.

With reference to any one of the second aspect or the possible implementations of the second aspect, in a third possible implementation of the second aspect, before the determining, by a second PE device, a vNH, the method further includes: receiving, by the second PE device, a first IP address set sent by the primary egress PE device, where the first IP address set includes at least one IP address; receiving, by the second PE device, a second IP address set sent by the secondary egress PE device, where the second IP address set includes at least one IP address; and determining, by the second PE device, an address pool, where the address pool is an intersection set of the first IP address set and the second IP address set; and the determining, by a second PE device, a vNH includes: determining, by the second PE device, an IP address from the address pool as the vNH. In the technical solution, the vNH is an IP address preset in the first PE device. In addition, an IP address that may be used as the vNH does not need to be set in the second PE device. In this way, setting in the second PE device can be simplified.

With reference to the second aspect itself or the first possible implementation of the second aspect, in a fourth possible implementation of the second aspect, the identity indication information includes an IP address of the primary egress PE device. In this way, the second PE device can directly indicate, based on an IP address of the first PE device, whether the first PE device is the primary egress PE device, and another identifier does not need to be allocated to the first PE device.

With reference to the second aspect itself or the first possible implementation of the second aspect, in a fifth possible implementation of the second aspect, the identity indication information includes a first identifier that is used to indicate that a PE device that receives the identity indication information is the secondary egress PE device. A length of a field that carries the first identifier in the technical solution may be less than a length of a field used to carry an IP address. In this way, a length of a field of the identity indication information can be shortened.

With reference to the second aspect itself or the first possible implementation of the second aspect, in a sixth possible implementation of the second aspect, the identity indication information includes a second identifier that is used to indicate that a PE device that receives the identity indication information is the primary egress PE device. A length of a field that carries the second identifier in the technical solution may be less than a length of a field used to carry an IP address. In this way, a length of a field of the identity indication information can be shortened.

With reference to any one of the second aspect or the possible implementations of the second aspect, in an seventh possible implementation of the second aspect, the protection information is carried in a first Border Gateway Protocol BGP message.

With reference to the third possible implementation of the second aspect, in a eighth possible implementation of the second aspect, the at least one IP address is carried in a second BGP message.

According to a third aspect, an embodiment of the present invention further provides a PE device, where the PE device includes units for performing steps of the method shown in the first aspect.

According to a fourth aspect, an embodiment of the present invention further provides a PE device, where the PE device includes units for performing steps of the method shown in the second aspect.

According to a fifth aspect, an embodiment of the present invention further provides a system for establishing a VPN LSP, where the system includes the PE device in the third aspect and the PE device in the fourth aspect.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a network model;
FIG. 2 is a schematic flowchart of a method for establishing a VPN LSP according to the present invention;
FIG. 3 is a schematic diagram of an NLRI field;
FIG. 4 is a structural block diagram of a PE device according to an embodiment of the present invention;
FIG. 5 is a structural block diagram of a PE device according to an embodiment of the present invention;
FIG. 6 is a structural block diagram of a PE device according to an embodiment of the present invention; and
FIG. 7 is a schematic diagram of a system for establishing a VPN LSP according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

To better understand the technical solutions of the present invention, the following describes related technologies used in the technical solutions of the present invention.

An MPLS VPN performs forwarding by using a label (English: label). Labels may be classified into an inner label (which may also be referred to as a bottom label or a local label) and an outer label (which may also be referred to as a top label or a global label). The outer label is used to form a data transmission tunnel between PE devices, and the inner label is used by a PE device to differentiate between data of different VPN users.

A label switched path (English: Label Switched Path, LSP for short, which may also be referred to as a tunnel) is formed between an ingress PE device and an egress PE device. The MPLS VPN can support different protocols, such as a Border Gateway Protocol (English: Border Gateway Protocol, BGP for short) and a Label Distribution Protocol (English: Label Distribution Protocol, LDP for short). Therefore, based on different protocols that are supported, the LSP may also be referred to as a BGP LSP, an LDP LSP, or the like. A VPN LSP referred to in the embodiments of the present invention is a general term of the foregoing LSPs. To be specific, the VPN LSP may be any of the BGP LSP and the LDP LSP.

The VPN LSP is corresponding to the outer label. After data enters a VPN by using the ingress PE device, the ingress PE device allocates a corresponding outer label and a corresponding inner label to the data, and sends the data to the egress PE device by using a VPN LSP corresponding to the outer label. A P device in the VPN LSP processes only the outer label, and ignores the inner label. The inner label is processed by only a PE device. The PE device further processes the data based on the inner label. Specifically, after receiving a data packet by using the VPN LSP, the egress PE device may determine whether an inner label included in the data packet is an inner label allocated by the egress PE device, and forward the data packet to a corresponding CE device if the inner label included in the data packet is the inner label allocated by the egress PE device. Unless specially noted, a label or a VPN label referred to in the present invention is an inner label.

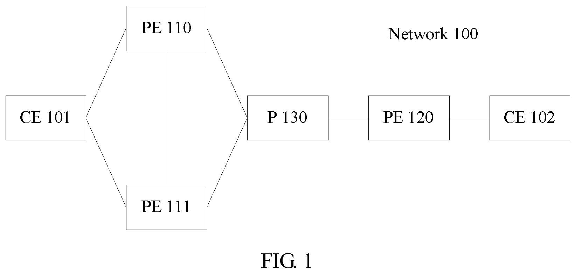

FIG. 1 is a schematic diagram of a network. A network 100 shown in FIG. 1 includes a CE 101, a CE 102, a PE 110, a PE 111, a PE 120, and a P 130. It may be understood that the network 100 may be a part of a carrier network, and the carrier network may further include another P device and another PE device.

The following describes the present invention in detail with reference to the network 100 shown in FIG. 1.

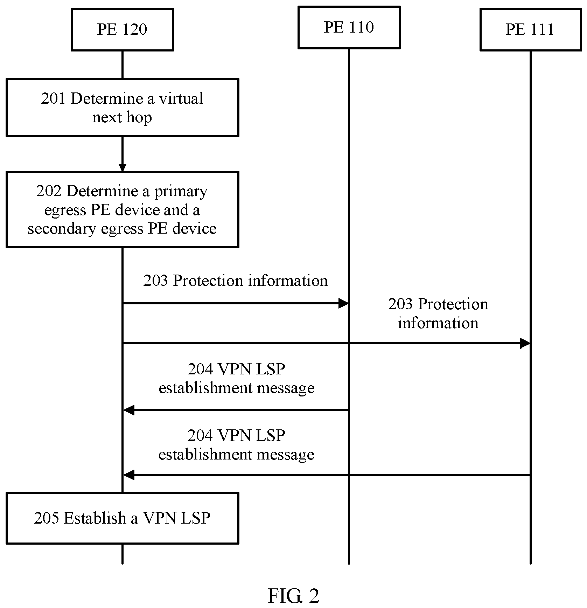

FIG. 2 is a schematic flowchart of a method for establishing a VPN LSP according to the present invention.

201. The PE 120 determines a virtual next hop (English: Virtual Next Hop, vNH for short).

Optionally, in some instances, the PE 120 may receive an Internet Protocol (English: Internet Protocol, IP for short) address of the PE 110 and a first IP address set that are sent by the PE 110. The first IP address set includes at least one IP address. The PE 120 may further receive an IP address of the PE 111 and a second IP address set that are sent by the PE 111. The second IP address set includes at least one IP address. Neither an IP address included in the first IP address set nor an IP address included in the second IP address set is an IP address of any network device in the carrier network. The first IP address set is preconfigured on the PE 110. The second IP address set is preconfigured on the PE 111. The PE 120 may determine an address pool. The address pool is an intersection set of the first IP address set and the second IP address set, and the address pool includes at least one IP address. That is, an intersection set of the address pool and an IP address set that includes IP addresses of all network devices in the carrier network is an empty set. The PE 120 may determine an IP address from the address pool as the vNH. The vNH is an IP address or an IP address prefix used to establish a VPN LSP.

Optionally, in some embodiments, an address pool may be directly configured on the PE 120. The address pool includes at least one IP address. An intersection set of the address pool and the IP address set that includes the IP addresses of all the network devices in the carrier network is an empty set. In this case, the PE 110 may send the IP address of the PE 110 to the PE 120, and the PE 111 may send the IP address of the PE 111 to the PE 120. The PE 120 may determine an IP address from the address pool as the vNH.

Optionally, in some embodiments, the IP addresses of the PE 110 and the PE 111 and the address pool may be directly configured on the PE 120. In this way, the PE 120 can directly obtain the preconfigured IP addresses of the PE 110 and the PE 111 and the address pool.

202. The PE 120 may determine a primary egress PE device and a secondary egress PE device from the PE 110 and the PE 111.

It is assumed that the PE 120 determines that the PE 110 is the primary egress PE device, and that the PE 111 is the secondary egress PE device.

The PE 120 may determine, according to a preset rule, that the PE 110 is the primary egress PE device, and that the PE 111 is the secondary egress PE device.

Optionally, in some embodiments, the PE 120 may determine the primary egress PE device and the secondary egress PE device by enabling a VPN fast reroute (English: Fast Reroute, FRR for short). The VPN FRR may select the primary egress PE device and the secondary egress PE device by using a matching policy. In addition, the VPN FRR may fill a forwarding entry with routing information of the primary egress PE device and routing information of the secondary egress PE device. Specifically, the routing information of the primary egress PE device includes information such as an IP address of the primary egress PE device and a VPN label (hereinafter referred to as a primary VPN label for short) allocated by the primary egress PE device to a route destined for a destination CE. The routing information of the secondary egress PE device includes an IP address of the secondary egress PE device, a VPN label (hereinafter referred to as a secondary VPN label for short) allocated by the secondary egress PE device to the route destined for the destination CE, and the like. In addition, the forwarding entry may further include information such as a VPN prefix, a destination IP address, and a protocol type. It may be understood that the routing information of the primary egress PE device may be determined when the primary egress PE device joins the VPN, and be advertised by the primary egress PE device, and the routing information of the secondary egress PE device may be determined when the secondary egress PE device joins the VPN, and be advertised by the secondary egress PE device. In addition, when advertising respective routing information, the primary egress PE device and the secondary egress PE device may advertise the VPN prefix at the same time.

Optionally, in some embodiments, the PE 120 may directly determine the primary egress PE device and the secondary egress PE device. For example, the IP address and/or the VPN label of the primary egress PE device and the IP address and/or the VPN label of the secondary egress PE device may be directly configured on the PE 120. If the PE 120 obtains the IP address or the primary VPN label of the primary egress PE device, the PE 120 determines that a PE device that sends the IP address or the VPN label is the primary egress PE device. If the PE 120 obtains the IP address or the secondary VPN label of the secondary egress PE device, the PE 120 determines that a PE device that sends the IP address or the VPN label is the secondary egress PE device. Similarly, the primary egress PE device and the secondary egress PE device may advertise the routing information to send respective IP addresses and VPN labels to the PE 120. In addition, when advertising respective routing information, the primary egress PE device and the secondary egress PE device may advertise the VPN prefix at the same time. After obtaining the routing information of the primary egress PE device, the routing information of the secondary egress PE device, and the VPN prefix, the PE 120 may fill the forwarding entry with corresponding content.

203. The PE 120 sends protection information to a target PE device, where the protection information may include the vNH. The target PE device may be the primary egress PE device and/or the secondary egress PE device.

Optionally, in some embodiments, the PE 120 may send the protection information to the PE 110. After receiving the protection information, the PE 110 may advertise a VPN LSP establishment message to the PE 120, and the VPN LSP establishment message is used to instruct to establish a VPN LSP by using the vNH as a tail endpoint.

Optionally, in some embodiments, the PE 120 may send the protection information to the PE 111. After receiving the protection information, the PE 111 may advertise a VPN LSP establishment message to the PE 120, and the VPN LSP establishment message is used to instruct to establish a VPN LSP by using the vNH as a tail endpoint.

Optionally, in some embodiments, the protection information may further include identity indication information, and the identity indication information is used to indicate that an identity of the target PE device is the primary egress PE device or the secondary egress PE device.

Optionally, in some embodiments, the identity indication information may include the IP address of the primary egress PE device and the IP address of the secondary egress PE device. The IP address of the primary egress PE device and the IP address of the secondary egress PE device are separately in different fields of the identity indication information. In this case, when determining that an IP address in a field that is in the identity indication information and that is used to indicate the primary egress PE device is the IP address of the PE 110, the PE 110 may determine that an identity of the PE 110 is the primary egress PE device. When determining that an IP address in a field that is in the identity indication information and that is used to indicate the secondary egress PE device is the IP address of the PE 111, the PE 111 may determine that an identity of the PE 111 is the secondary egress PE device.

In some embodiments, the PE 120 may separately send different identity indication information to the PE 110 and the PE 111. Specifically, when the PE 120 determines that the PE 110 is the primary egress PE device, the PE 120 sends identity indication information to the PE 110, to indicate that the PE 110 is the primary egress PE device. When the PE 120 determines that the PE 111 is the secondary egress PE device, the PE 120 sends identity indication information to the PE 111, to indicate that the PE 111 is the secondary egress PE device. The identity indication information may be an IP address of an egress PE device. For example, the identity indication information sent to the primary egress PE device may be the IP address of the primary egress PE device, and the identity indication information sent to the secondary egress PE device may be the IP address of the secondary egress PE device. Alternatively, the identity indication information may be a simple value. For example, a value of the identity indication information sent to the primary egress PE device may be 1, and a value of the identity indication information sent to the secondary egress PE device may be 0. Certainly, in addition to an IP address or a simple value, the identity indication information may be other information that may be used to distinguish between identities of the primary egress PE device and the secondary egress PE device, and this is not enumerated herein.

Optionally, in some embodiments, the protection information may further include a primary VPN label. After receiving the protection information, the PE 111 may establish a correlation (English: Correlation) relationship between the primary VPN label and a secondary VPN label. In some embodiments, the PE 111 may generate a VPN label switching table. The VPN label switching table is corresponding to the vNH, an incoming label in the VPN label switching table is the primary VPN label, and an outgoing label in the VPN label switching table is the secondary VPN label.

204. The PE 110 and/or the PE 111 may advertise a VPN LSP establishment message to the PE 120, where the VPN LSP establishment message is used to instruct to establish a VPN LSP by using the vNH as a tail endpoint.

An ingress PE device of the VPN LSP is the PE 120, a primary egress PE device of the VPN LSP is the PE 110, and a secondary egress PE device of the VPN LSP is the PE 111. It may be understood that the VPN LSP is a VPN LSP from the egress PE device to the ingress PE device. A VPN LSP between other nodes in the VPN LSP may be referred to as a sub-VPN LSP. For example, in the network shown in FIG. 1, a sub-VPN LSP is established between the PE 110 and the P 130, a sub-VPN LSP is established between the PE 111 and the P 130, and a sub-VPN LSP is established between the P 130 and PE 120.

The PE 111 is used as an example. Optionally, in some embodiments, the PE 111 may introduce the vNH to the Interior Gateway Protocol (English: Interior Gateway Protocol, IGP for short), to spread the vNH to all PE devices and P devices in a carrier network in which the PE 111 is located. The network 100 is used as an example. The PE 111 may first send the vNH to the P 130. A sub-VPN LSP is established between the P 130 and the PE 111. The P 130 may send the vNH to the PE 120. A sub-VPN LSP is established between the PE 120 and the P 130. In this way, a VPN LSP from the PE 111 to the PE 120 can be formed.

Optionally, in some embodiments, the PE 111 may send route update information to all the PE devices and P devices in the carrier network in which the PE 111 is located, and a tail endpoint that is in the route update information and that is used to establish a VPN LSP is the vNH. The network 100 is used as an example. The PE 111 may first send the vNH to the P 130. A sub-VPN LSP is established between the P 130 and the PE 111. The P 130 may send the vNH to the PE 120. A sub-VPN LSP is established between the PE 120 and the P 130. In this way, a VPN LSP from the PE 111 to the PE 120 can be formed.

Optionally, in some embodiments, the PE 110 (that is, the primary egress PE device) and the PE 111 (that is, the secondary egress PE device) may further separately determine metric (English: metric) values, and advertise the determined metric values to the PE 120. The metric value may be carried in the VPN LSP establishment message. A first metric value set for the PE 111 is greater than a second metric value set for the PE 110. In this way, when both the primary egress PE device and the secondary egress PE device can normally work, data in the VPN LSP preferentially flows to the primary egress PE device. Certainly, because the ingress PE device also determines identity information of the primary egress PE device and the secondary egress PE device in the at least two PE devices, the ingress PE device may also set corresponding metric values for the primary egress PE device and the secondary egress PE device.

205. The PE 120 establishes a VPN LSP based on the received VPN LSP establishment message. An ingress PE device of the VPN LSP is the PE 120, a primary egress PE device of the VPN LSP is the PE 110, and a secondary egress PE device of the VPN LSP is the PE 111.

After establishment of the VPN LSP is completed, the PE 120 may send, to the CE 101 by using the VPN LSP, an IP packet sent by the CE 102 to the CE 101.

Specifically, when the PE 110 normally works, a tunnel label corresponding to the vNH is encapsulated at an outer layer of the IP packet, and an inner label is the primary VPN label. After receiving the IP packet, the P 130 may determine, based on the metric values of the PE 110 and the PE 111, that the PE 110 is the primary egress PE device. The P 130 sends the IP packet to the PE 110. After receiving the IP packet, the PE 110 may determine, based on the inner label, an egress to the CE 101, and then send the IP packet to the CE 101. After the PE 110 is faulty, the P 130 can first perceive that the PE 110 is faulty. In this case, the P 130 may send, to the PE 111, the IP packet received from the PE 120. In this case, the tunnel label corresponding to the vNH is encapsulated at the outer layer of the IP packet, and the inner label is the primary VPN label. After receiving the IP packet, the PE 111 may determine the vNH corresponding to the tunnel label. After determining the vNH, the PE 111 may determine a VPN label switching table corresponding to the vNH. The PE 111 determines, based on the VPN label switching table, a secondary VPN label correlated with the primary VPN label. After determining the secondary VPN label, the PE 111 may determine an egress to the CE 101 based on the secondary VPN label, and then send the IP packet to the CE 101. When the PE 120 perceives that the PE 110 is faulty, the PE 120 determines that the tunnel label corresponding to the vNH is encapsulated at the outer layer of the IP packet to be sent to the CE 101, and that the inner label is changed to the secondary VPN label. After receiving an encapsulated IP packet, the P 130 may send the IP packet to the PE 111. The PE 111 may determine the egress to the CE 101 based on the secondary VPN label, and then send the IP packet to the CE 101.

In conclusion, in the technical solution of the present invention, when the primary egress PE device is faulty, the P device may directly send a packet between the P device and the ingress PE device to the secondary egress PE device, and the secondary egress PE device may forward the packet to a destination CE device. In this way, the packet between the P device and the ingress PE device is not lost. In addition, it is assumed that a moment at which the primary egress PE device is faulty is T₁, a moment at which the P device perceives that the primary egress PE device is faulty is T₂, and a moment at which the ingress PE device perceives that the primary egress PE device is faulty is T₃. It may be understood that the P device first perceives that the primary egress PE device is faulty, and then the ingress PE device can perceive that the primary egress PE device is faulty. Therefore, T₃ is greater than T₂, and T₂ is greater than T₁. Therefore, a path convergence time for a VPN LSP established based on the foregoing technical solution may be changed from T₃-T₁ to T₂-T₁. In this way, a path convergence speed can be accelerated when the primary egress PE device is faulty.

A person skilled in the art may understand that a specific manner in which the P device and the ingress PE device can perceive that the primary egress PE device is faulty is the same as that in the prior art. For example, the P device and the ingress PE device may perceive, by using a technology such as bidirectional forwarding detection (English: Bidirectional Forwarding Detection, BFD for short) and MPLS operation, administration and maintenance (English: Operation, Administration and Maintenance, OAM for short), that a VPN LSP between the ingress PE device and the primary egress PE device is unavailable. In addition, it may be understood that, that the primary egress PE device is faulty described in the present invention means that the VPN LSP between the ingress PE device and the primary egress PE device is unavailable.

In the method shown in FIG. 2, information between the ingress PE device and the egress PE device may be messages of various protocols, for example, may be a Border Gateway Protocol (English: Border Gateway Protocol, BGP for short) message and an Intermediate System to Intermediate System (English: Intermediate System to Intermediate System, IS-IS for short) message. A BGP message is used as an example for description below.

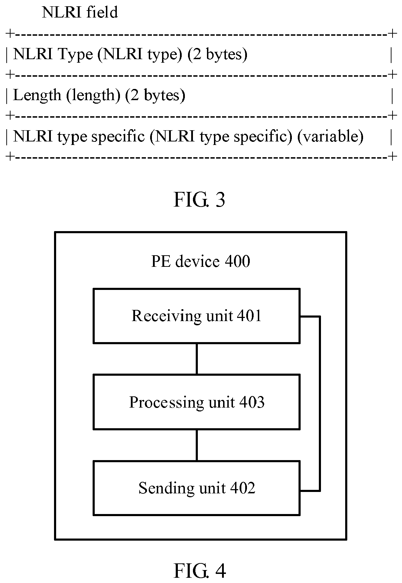

For example, in some embodiments, at least one IP address and protection information may be carried by extending an MP_REACH_NLRI attribute and an MP_UNREACH_NLRI attribute of BGP. Specifically, the MP_REACH_NLRI attribute is used as an example. A value of a subsequent address family identifier (English: Subsequent Address Family Identifier, SAFI for short) in the MP_REACH_NLRI attribute may be extended, and an identifier used to represent a BGP protection (English: BGP Protection) address family is added. A value of an SAFI used to represent the BGP protection address family may be allocated by the Internet Engineering Task Force (The Internet Engineering Task Force, IETF for short). Further, a network layer reachability information (English: Network Layer Reachability Information, NLRI for short) field in the MP_REACH_NLRI attribute may be further extended. FIG. 3 is a schematic diagram of an NLRI field. The NLRI field shown in FIG. 3 includes an NLRI type (English: NLRI Type) field, a length (English: Length) field, and an NLRI type specific (English: NLRI Type specific) field. A length of the NLRI type field is 2 bytes. The NLRI type field is used to indicate a type of the network layer reachability information. The NLRI type field may include a type 1 and a type 2. A length of the length field is 2 bytes. A length of the NLRI type specific field is variable, and is used to carry specific content. Specifically, when a value of the NLRI type field is 1, the NLRI type specific field may carry at least one IP address. In other words, the primary egress PE device and the secondary egress PE device may send the at least one IP address to the ingress PE device by using an NLRI field of the type 1. When the value of the NLRI type field is 2, the NLRI type specific field may carry protection information. In other words, the ingress PE device may send the protection information to the primary egress PE device and the secondary egress PE device by using an NLRI field of the type 2. Similarly, the at least one IP address and the protection information may be carried by extending the MP_UNREACH_NLRI attribute. A specific extension manner is the same as a manner of extending the MP_REACH_NLRI attribute, and details are not described herein.

In addition, in addition to extending the MP_REACH_NLRI attribute and the MP_UNREACH_NLRI attribute, the at least one IP address and the protection information may be carried by adding a BGP attribute.

FIG. 4 is a structural block diagram of a PE device according to an embodiment of the present invention. As shown in FIG. 4, a PE device 400 includes a receiving unit 401 and a sending unit 402.

The receiving unit 401 is configured to receive protection information sent by a second PE device, where the protection information includes a virtual next hop vNH.

The sending unit 402 is configured to advertise a virtual private network VPN label switched path LSP establishment message to the second PE device, where the VPN LSP establishment message is used to instruct to establish a VPN LSP by using the vNH as a tail endpoint.

Optionally, in some embodiments, the protection information further includes identity indication information and a primary VPN label, where the identity indication information is used to indicate that an identity of the PE device is a primary egress PE device or a secondary egress PE device, and the primary VPN label is a VPN label allocated by the primary egress PE device to a route destined for a destination customer edge CE device. The PE device further includes a processing unit 403, configured to determine, based on the identity indication information, that the identity of the PE device is the secondary egress PE device. The processing unit 403 is further configured to establish a correlation relationship between a secondary VPN label and the primary VPN label, where the secondary VPN label is a VPN label allocated by the PE device to the route destined for the destination CE.

Optionally, in some embodiments, the processing unit 403 is specifically configured to generate a VPN label switching table, where the VPN label switching table is corresponding to the vNH, an incoming label in the VPN label switching table is the primary VPN label, and an outgoing label in the VPN label switching table is the secondary VPN label.

Optionally, in some embodiments, the identity indication information includes an Internet Protocol IP address of the secondary egress PE device. The processing unit 403 is specifically configured to: when determining that the IP address of the secondary egress PE device is the same as an IP address of the PE device, determine that the PE device is the secondary egress PE device.

Optionally, in some embodiments, the processing unit 403 is further configured to determine a first metric value, where the first metric value is greater than a second metric value, and the second metric value is determined by the primary egress PE device. The sending unit 402 is further configured to advertise the first metric value to the second PE device.

Optionally, in some embodiments, the sending unit 402 is further configured to send at least one IP address to the second PE device, where the vNH is an IP address in the at least one IP address.

For operations and functions of the units in the PE device 400, refer to descriptions of the PE 110 and the PE 111 in the method shown in FIG. 2. To avoid repetition, details are not described herein again. The processing unit in the PE device 400 shown in FIG. 4 may be implemented by a processor, and the sending unit and the receiving unit may be implemented by a transceiver.

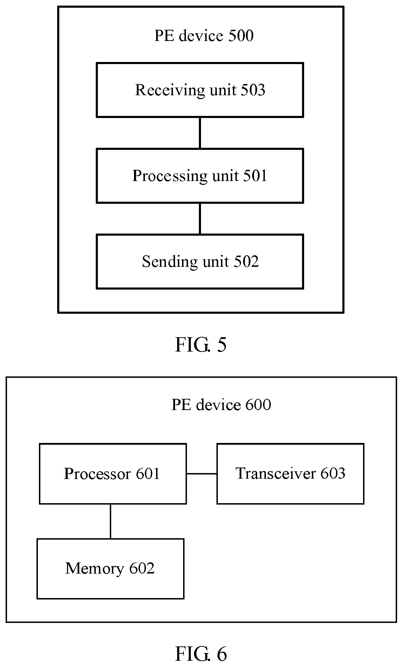

FIG. 5 is a structural block diagram of another PE device according to an embodiment of the present invention. As shown in FIG. 5, a PE device 500 includes a processing unit 501, a sending unit 502, and a receiving unit 503.

The processing unit 501 is configured to determine a virtual next hop vNH.

The sending unit 502 is configured to send protection information to a first PE device, where the protection information includes the vNH, and the first PE device is a primary egress PE device or a secondary egress PE device.

The receiving unit 503 is configured to receive a virtual private network VPN label switched path LSP establishment message advertised by the first PE device, where the VPN LSP establishment message is used to instruct to establish a VPN LSP by using the vNH as a tail endpoint.

Optionally, in some embodiments, the protection information further includes identity indication information, and the identity indication information is used to indicate that an identity of the first PE device is the primary egress PE device or the secondary egress PE device.

Optionally, in some embodiments, the protection information further includes a primary VPN label, and the primary VPN label is a VPN label allocated by the primary egress PE device to a route destined for a destination customer edge CE device.

Optionally, in some embodiments, the identity indication information includes an IP address of the secondary egress PE device.

Optionally, in some embodiments, the receiving unit 503 is further configured to receive a first IP address set sent by the primary egress PE device, where the first IP address set includes at least one IP address. The receiving unit 503 is further configured to receive a second IP address set sent by the secondary egress PE device, where the second IP address set includes at least one IP address. The processing unit 501 is further configured to determine an address pool, where the address pool is an intersection set of the first IP address set and the second IP address set. The processing unit 501 is specifically configured to determine an IP address from the address pool as the vNH.

For operations and functions of the units in the PE device 500, refer to descriptions of the PE 120 in the method shown in FIG. 2. To avoid repetition, details are not described herein again. The processing unit in the PE device 500 shown in FIG. 5 may be implemented by a processor, and the sending unit and the receiving unit may be implemented by a transceiver.

An embodiment of the present invention further provides a system for establishing a VPN LSP, and the system may include the PE device shown in FIG. 4 and the PE device shown in FIG. 5.

FIG. 6 is a structural block diagram of a PE device according to an embodiment of the present invention. A PE device 600 shown in FIG. 6 includes a processor 601, a memory 602, and a transceiver 603.

The method disclosed in the foregoing embodiment of the present invention may be applied to the processor 601, or may be implemented by the processor 601. The processor 601 may be an integrated circuit chip, and has a signal processing capability. In an implementation process, steps in the foregoing methods may be implemented by using an integrated logical circuit of hardware in the processor 601, or by using an instruction in a form of software. The processor 601 may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware component. The process 601 may implement or perform the methods, the steps, and logical block diagrams that are disclosed in the embodiments of the present invention. The general purpose processor may be a microprocessor, or the processor may be any conventional processor or the like. Steps of the methods disclosed with reference to the embodiments of the present invention may be directly performed by using a hardware decoding processor, or performed by using a combination of hardware and software modules in the decoding processor. The software module may be located in a mature storage medium in the art, such as a random access memory (Random Access Memory, RAM), a flash memory, a read-only memory (Read-Only Memory, ROM), a programmable read-only memory or an electrically erasable programmable memory, or a register. The storage medium is located in the memory 602, and the processor 601 reads instructions in the memory 602 and completes the steps in the foregoing methods in combination with the hardware of the processor.

Optionally, in some embodiments, the memory 602 may store an instruction used to perform the method performed by the PE 110 in the method shown in FIG. 2. The processor 601 may complete, by executing the instruction stored in the memory 602 in combination with other hardware (for example, the transceiver 603), steps performed by the PE 110 in the method shown in FIG. 2. For a specific working process and a beneficial effect, refer to descriptions of the PE 110 in the embodiment shown in FIG. 2.

Optionally, in other embodiments, the memory 602 may store an instruction used to perform the method performed by the PE 111 in the method shown in FIG. 2. The processor 601 may complete, by executing the instruction stored in the memory 602 in combination with other hardware (for example, the transceiver 603), steps performed by the PE 111 in the method shown in FIG. 2. For a specific working process and a beneficial effect, refer to descriptions of the PE 111 in the embodiment shown in FIG. 2.

Optionally, in other embodiments, the memory 602 may store an instruction used to perform the method performed by the PE 120 in the method shown in FIG. 2. The processor 601 may complete, by executing the instruction stored in the memory 602 in combination with other hardware (for example, the transceiver 603), steps performed by the PE 120 in the method shown in FIG. 2. For a specific working process and a beneficial effect, refer to descriptions of the PE 120 in the embodiment shown in FIG. 2.

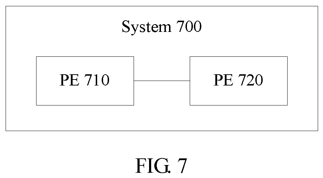

FIG. 7 is a schematic diagram of a system for establishing a VPN LSP according to an embodiment of the present invention. As shown in FIG. 7, a system 700 includes a PE 710 and a PE 720.

Optionally, in some embodiments, the PE 710 in the system 700 may be an ingress PE device of a VPN LSP, and the PE 720 may be a primary egress PE device of the VPN LSP. Further, the system 700 may include a secondary egress PE device. The system 700 may further include at least one P device.

Optionally, in some embodiments, the PE 710 in the system 700 may be an ingress PE device of a VPN LSP, and the PE 720 may be a secondary egress PE device of the VPN LSP. Further, the system 700 may include a primary egress PE device. The system 700 may further include at least one P device.

For a specific working process and a structure of each device in the system 700, refer to descriptions of corresponding devices in the embodiments shown in FIG. 2, FIG. 4, FIG. 5, and FIG. 6. Details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for establishing a virtual private network, VPN, label switched path, LSP, wherein the method comprises:
receiving (203), by a first provider edge, PE, device (110, 111), protection information sent by a second PE device (120), wherein the protection information comprises a virtual next hop, vNH; and the first PE device (110, 111) is an egress PE device and the second PE device (120) is an ingress PE device and the protection information further comprises identity indication information that is used to indicate that an identity of the first PE device (110, 111) is a primary egress PE device or a secondary egress PE device; and
sending (204), by the first PE device (110, 111), a VPN LSP establishment message to the second PE device (120), wherein the VPN LSP establishment message is used to instruct to establish a VPN LSP by using the vNH as a tail endpoint.

2. The method according to claim 1, wherein the protection information further comprises a primary VPN label, the primary VPN label is a VPN label allocated by a primary egress PE device to a route destined for a destination customer edge, CE, device (101); and
the method further comprises:
determining, by the first PE device (110, 111) based on the identity indication information, that the identity of the first PE device (110, 111) is the secondary egress PE device; and
establishing, by the first PE device (110, 111), a correlation relationship between a secondary VPN label and the primary VPN label, wherein the secondary VPN label is a VPN label allocated by the first PE device (110, 111) to the route destined for the destination CE (101).

3. The method according to claim 2, wherein the establishing, by the first PE device (110, 111), a correlation relationship between a secondary VPN label and the primary VPN label comprises:
generating, by the first PE device (110, 111), a VPN label switching table, wherein the VPN label switching table is corresponding to the vNH, an incoming label in the VPN label switching table is the primary VPN label, and an outgoing label in the VPN label switching table is the secondary VPN label.

4. The method according to claim 2 or 3, wherein the identity indication information comprises an Internet Protocol, IP, address of the secondary egress PE device; and
the determining, by the first PE device (110, 111) based on the identity indication information, that the first PE device (110, 111) is the secondary egress PE device comprises:
when determining that the IP address of the secondary egress PE device is the same as an IP address of the first PE device (110, 111), determining, by the first PE device (110, 111), that the first PE device (110, 111) is the secondary egress PE device.

5. The method according to any one of claims 2 to 4, wherein before the sending, by the first PE device (110, 111), a VPN LSP establishment message to the second PE device (120), the method further comprises:
determining, by the first PE device (110, 111), a first metric value, wherein the first metric value is greater than a second metric value, and the second metric value is determined by the primary egress PE device; and
advertising, by the first PE device (110, 111), the first metric value to the second PE device (120).

6. The method according to any one of claims 1 to 5, wherein before the receiving, by a first PE device (110, 111), protection information sent by a second PE device (120), the method further comprises:
sending, by the first PE device (110, 111), at least one IP address to the second PE device, wherein the vNH is an IP address in the at least one IP address.

7. A method for establishing a virtual private network, VPN, label switched path, LSP, wherein the method comprises:
determining (201), by a second provider edge, PE, device (120), a virtual next hop, vNH, the second PE device (120) being an ingress PE device;
sending (203), by the second PE device (120), protection information to a first PE device (110, 111), the first PE device being an egress PE device, wherein the protection information comprises the vNH and identity indication information that is used to indicate that an identity of the first PE device (110, 111) is a primary egress PE device or a secondary egress PE device; and
receiving (204), by the second PE device (120), a VPN LSP establishment message advertised by the first PE device (110, 111), wherein the VPN LSP establishment message is used to instruct to establish a VPN LSP by using the vNH as a tail endpoint.

8. The method according to claim 7, wherein before the determining, by a second PE device (120), a vNH, the method further comprises:
receiving, by the second PE device (120), a first IP address set sent by the first PE device (110, 111), wherein the first IP address set comprises at least one IP address;
receiving, by the second PE device (120), a second IP address set sent by a third egress PE device (110, 111), wherein the second IP address set comprises at least one IP address; and
determining, by the second PE device (120), an address pool, wherein the address pool is an intersection set of the first IP address set and the second IP address set; and
the determining, by a second PE device (120), a vNH comprises:
determining, by the second PE device (120), an IP address from the address pool as the vNH.

9. A provider edge, PE, device (110, 111), wherein the PE device (110, 111) is an egress PE device and comprises:
a receiving unit (401), configured to receive protection information sent by a second PE device (120), the second PE device (120) being an ingress PE device, wherein the protection information comprises a virtual next hop, vNH and identity indication information that is used to indicate that an identity of the PE device (110, 111) is a primary egress PE device or a secondary egress PE device; and
a sending unit (402), configured to send a virtual private network, VPN, label switched path, LSP, establishment message to the second PE device (120), wherein the VPN LSP establishment message is used to instruct to establish a VPN LSP by using the vNH as a tail endpoint.

10. The PE device (110, 111) according to claim 9, wherein the protection information further comprises a primary VPN label, wherein the primary VPN label is a VPN label allocated by a primary egress PE device to a route destined for a destination customer edge CE device (101); and
the PE device (110, 111) further comprises a processing unit (403), configured to determine, based on the identity indication information, that the identity of the PE device (110, 111) is the secondary egress PE device, wherein
the processing unit (403) is further configured to establish a correlation relationship between a secondary VPN label and the primary VPN label, wherein the secondary VPN label is a VPN label allocated by the PE device (110, 111) to the route destined for the destination CE (101).

11. The PE device (110, 111) according to claim 10, wherein the processing unit (403) is specifically configured to generate a VPN label switching table, wherein the VPN label switching table is corresponding to the vNH, an incoming label in the VPN label switching table is the primary VPN label, and an outgoing label in the VPN label switching table is the secondary VPN label.

12. The PE device (110, 111) according to claim 10 or 11, wherein the identity indication information comprises an Internet Protocol, IP, address of the secondary egress PE device; and
the processing unit (403) is specifically configured to: when determining that the IP address of the secondary egress PE device is the same as an IP address of the PE device (110, 111), determine that the PE device (110, 111) is the secondary egress PE device.

13. A provider edge, PE, device (120), wherein the PE device (120) is an ingress PE device and comprises:
a processing unit (501), configured to determine a virtual next hop, vNH; and
a sending unit (502), configured to send protection information to a first PE device (110, 111), the first PE device being an egress PE device, wherein the protection information comprises the vNH and identity indication information that is used to indicate that an identity of the first PE device (110, 111) is a primary egress PE device or a secondary egress PE device; and
a receiving unit (503), configured to receive a virtual private network, VPN, label switched path, LSP, establishment message advertised by the first PE device (110, 111), wherein the VPN LSP establishment message is used to instruct to establish a VPN LSP by using the vNH as a tail endpoint.

## Patentansprüche

1. Verfahren zum Einrichten eines virtuellen privaten Netzwerks, VPN, Label Switched Path, LSP, wobei das Verfahren Folgendes umfasst:
Empfangen (203), durch ein erstes Provider-Edge, PE-Gerät (110, 111), von Schutzinformationen, die von einem zweiten PE-Gerät (120) gesendet werden, wobei die Schutzinformationen einen virtuellen nächsten Hop, vNH, umfassen; und
wobei das erste PE-Gerät (110, 111) ein Egress-PE-Gerät und das zweite PE-Gerät (120) ein Ingress-PE-Gerät ist, und wobei die Schutzinformationen ferner Identitätsanzeigeinformationen umfassen, die verwendet werden, um anzuzeigen, dass eine Identität des ersten PE-Geräts (110, 111) ein primäres Egress-PE-Gerät oder ein sekundäres Egress-PE-Gerät ist; und
Senden (204), durch das erste PE-Gerät (110, 111), einer VPN-LSP-Einrichtungsnachricht an das zweite PE-Gerät (120), wobei die VPN-LSP-Einrichtungsnachricht verwendet wird, um anzuweisen, einen VPN-LSP unter Verwendung des vNH als Endpunkt zu errichten.

2. Verfahren nach Anspruch 1, wobei die Schutzinformationen ferner ein primäres VPN-Label umfassen, wobei das primäre VPN-Label ein VPN-Label ist, das von einem primären Egress-PE-Gerät einer Route zugewiesen wird, die für ein Zielkunden-Edge-Gerät, CE, bestimmt ist (101); und
das Verfahren ferner Folgendes umfassend:
Bestimmen, durch das erste PE-Gerät (110, 111), basierend auf der Identitätsanzeigeinformation, dass die Identität des ersten PE-Geräts (110, 111) das sekundäre Egress-PE-Gerät ist; und
Einrichten, durch das erste PE-Gerät (110, 111), einer Korrelationsbeziehung zwischen einem sekundären VPN-Label und dem primären VPN-Label, wobei das sekundäre VPN-Label ein VPN-Label ist, das durch das erste PE-Gerät (110, 111) der für das Ziel-CE (101) bestimmten Route zugewiesen wird.

3. Verfahren nach Anspruch 2, wobei das Einrichten einer Korrelationsbeziehung zwischen einem sekundären VPN-Label und dem primären VPN-Label durch die erste PE-Vorrichtung (110, 111) Folgendes umfasst:
Erzeugen, durch das erste PE-Gerät (110, 111), einer VPN-Label-Switching-Tabelle, wobei die VPN-Label-Switching-Tabelle dem vNH entspricht, wobei ein ankommendes Label in der VPN-Label-Switching-Tabelle das primäre VPN-Label und ein abgehendes Label in der VPN-Label-Switching-Tabelle das sekundäre VPN-Label ist.

4. Verfahren nach Anspruch 2 oder 3, wobei die Identitätsanzeigeinformation eine Internetprotokoll-, IP-, Adresse des sekundären Egress-PE-Geräts umfasst; und
wobei das Bestimmen, durch das erste PE-Gerät (110, 111) auf der Grundlage der Identitätsanzeigeinformation, dass das erste PE-Gerät (110, 111) das sekundäre Egress-PE-Gerät ist, Folgendes umfasst:
bei der Bestimmung, dass die IP-Adresse des sekundären Egress-PE-Geräts die gleiche ist wie eine IP-Adresse des ersten PE-Geräts (110, 111), Bestimmen, durch das erste PE-Gerät (110, 111), dass das erste PE-Gerät (110, 111) das sekundäre Egress-PE-Gerät ist.

5. Verfahren nach einem der Ansprüche 2 bis 4, wobei vor dem Senden, durch das erste PE-Gerät (110, 111), einer VPN-LSP-Einrichtungsnachricht an das zweite PE-Gerät (120), das Verfahren ferner Folgendes umfasst:
Bestimmen, durch das erste PE-Gerät (110, 111), eines ersten metrischen Wertes, wobei der erste metrische Wert größer als ein zweiter metrischer Wert ist und wobei der zweite metrische Wert durch das primäre Egress-PE-Gerät bestimmt wird; und
Ankündigen, durch das erste PE-Gerät (110, 111), des ersten metrischen Werts an das zweite PE-Gerät (120).

6. Verfahren nach einem der Ansprüche 1 bis 5, wobei vor dem Empfangen, durch ein erstes PE-Gerät (110, 111), von Schutzinformationen, die durch ein zweites PE-Gerät (120) gesendet werden, das Verfahren ferner Folgendes umfasst:
Senden, durch das erste PE-Gerät (110, 111), mindestens einer IP-Adresse an das zweite PE-Gerät, wobei das vNH eine IP-Adresse in der mindestens einen IP-Adresse ist.

7. Verfahren zum Einrichten eines virtuellen privaten Netzwerk-, VPN, Label Switched Path, LSP, wobei das Verfahren Folgendes umfasst:
Bestimmen (201), durch ein zweites Provider-Edge, PE-Gerät (120), eines virtuellen nächsten Hop, vNH, wobei das zweite PE-Gerät (120) ein Ingress-PE-Gerät ist;
Senden (203), durch das zweite PE-Gerät (120), von Schutzinformationen an ein erstes PE-Gerät (110 111), wobei das erste PE-Gerät ein Egress-PE-Gerät ist, wobei die Schutzinformationen die vNH- und Identitätsanzeigeinformationen umfassen, die verwendet werden, um anzuzeigen, dass eine Identität des ersten PE-Geräts (110, 111) ein primäres Egress-PE-Gerät oder ein sekundäres Egress-PE-Gerät ist; und
Empfangen (204), durch das zweite PE-Gerät (120), einer VPN-LSP-Einrichtungsnachricht, die durch das erste PE-Gerät (110, 111) angekündigt wird, wobei die VPN-LSP-Einrichtungsnachricht verwendet wird, um die Einrichtung eines VPN-LSP unter Verwendung des vNH als Endpunkt anzuweisen.

8. Verfahren nach Anspruch 7, wobei vor dem Bestimmen, durch ein zweites PE-Gerät (120), eines vNH, das Verfahren ferner Folgendes umfasst:
Empfangen, durch das zweite PE-Gerät (120), eines ersten IP-Adressensatzes, der von dem ersten PE-Gerät (110, 111) gesendet wurde, wobei der erste IP-Adressensatz mindestens eine IP-Adresse umfasst;
Empfangen, durch das zweite PE-Gerät (120), eines zweiten IP-Adressensatzes, der von einem dritten Egress-PE-Gerät (110, 111) gesendet wurde, wobei der zweite IP-Adressensatz mindestens eine IP-Adresse umfasst; und
Bestimmen, durch das zweite PE-Gerät (120), eines Adresspools, wobei der Adresspool ein Schnittmengensatz des ersten IP-Adressensatzes und des zweiten IP-Adressensatzes ist; und
wobei das Bestimmen eines vNH durch ein zweites PE-Gerät (120) Folgendes umfasst:
Bestimmen, durch das zweite PE-Gerät (120), einer IP-Adresse aus dem Adresspool als vNH.

9. Provider-Edge, PE,-Gerät (110, 111), wobei das PE-Gerät (110, 111) ein Egress-PE-Gerät ist und Folgendes umfasst:
eine Empfangseinheit (401), die für das Empfangen von Schutzinformationen konfiguriert ist, die von einem zweiten PE-Gerät (120) gesendet werden, wobei das zweite PE-Gerät (120) ein Ingress-PE-Gerät ist, wobei die Schutzinformationen einen virtuellen nächsten Hop, vNH und Identitätsanzeigeinformationen umfassen, die verwendet werden, um anzuzeigen, dass eine Identität des PE-Geräts (110, 111) ein primäres Egress-PE-Gerät oder ein sekundäres Egress-PE-Gerät ist; und
eine Sendeeinheit (402), die dafür konfiguriert ist, eine Einrichtungsnachricht für einen virtuellen privaten Netzwerk-, VPN, Label Switched Path, LSP, an das zweite PE-Gerät (120) zu senden, wobei die VPN-LSP-Einrichtungsnachricht verwendet wird, um die Einrichtung eines VPN-LSP unter Verwendung des vNH als Endpunkt anzuweisen.

10. PE-Gerät (110, 111) nach Anspruch 9, wobei die Schutzinformationen ferner ein primäres VPN-Label umfassen, wobei das primäre VPN-Label ein VPN-Label ist, das von einem primären Egress-PE-Gerät einer Route zugewiesen wird, die für ein Zielkunden-Edge-CE-Gerät (101) bestimmt ist; und
wobei das PE-Gerät (110, 111) ferner eine Verarbeitungseinheit (403) umfasst, die dafür konfiguriert ist, auf der Grundlage der Identitätsanzeigeinformation zu bestimmen, dass die Identität des PE-Geräts (110, 111) das sekundäre Egress-PE-Gerät ist, wobei die Verarbeitungseinheit (403) ferner dafür konfiguriert ist, eine Korrelationsbeziehung zwischen einem sekundären VPN-Label und dem primären VPN-Label herzustellen, wobei das sekundäre VPN-Label ein VPN-Label ist, das vom PE-Gerät (110, 111) der Route zugewiesen wird, die für das Ziel-CE (101) bestimmt ist.

11. PE-Gerät (110, 111) nach Anspruch 10, wobei die Verarbeitungseinheit (403) speziell dafür konfiguriert ist, eine VPN-Label-Switching-Tabelle zu erzeugen, wobei die VPN-Label-Switching-Tabelle dem vNH entspricht, wobei ein ankommendes Label in der VPN-Label-Switching-Tabelle das primäre VPN-Label ist und wobei ein abgehendes Label in der VPN-Label-Switching-Tabelle das sekundäre VPN-Label ist.

12. PE-Gerät (110, 111) nach Anspruch 10 oder 11, wobei die Identitätsanzeigeinformation eine Internetprotokoll-, IP-, Adresse des sekundären Egress-PE-Geräts umfasst; und
wobei die Verarbeitungseinheit (403) speziell für den folgenden Zweck konfiguriert ist:
bei der Bestimmung, dass die IP-Adresse des sekundären Egress-PE-Geräts mit einer IP-Adresse des PE-Geräts (110, 111) übereinstimmt, bestimmen, dass das PE-Gerät (110, 111) das sekundäre Egress-PE-Gerät ist.

13. Provider-Edge, PE,-Gerät (120), wobei das PE-Gerät (120) ein Ingress-PE-Gerät ist, umfassend:
eine Verarbeitungseinheit (501), die dafür konfiguriert ist, einen virtuellen nächsten Hop, vNH, zu bestimmen; und
eine Sendeeinheit (502), die dafür konfiguriert ist, Schutzinformationen an ein erstes PE-Gerät (110, 111) zu senden, wobei das erste PE-Gerät ein Egress-PE-Gerät ist, wobei die Schutzinformationen die vNH- und
Identitätsanzeigeinformationen umfassen, die verwendet werden, um anzuzeigen, dass eine Identität des ersten PE-Geräts (110, 111) ein primäres Egress-PE-Gerät oder ein sekundäres Egress-PE-Gerät ist; und
eine Empfangseinheit (503), die dafür konfiguriert ist, eine von dem ersten PE-Gerät (110, 111) angekündigte Einrichtungsnachricht für einen virtuellen privaten Netzwerk-, VPN, Label Switched Path, LSP, zu empfangen, wobei die VPN-LSP-Einrichtungsnachricht verwendet wird, um die Einrichtung eines VPN-LSP unter Verwendung des vNH als Endpunkt anzuweisen.

## Revendications

1. Procédé pour établir un trajet commuté par étiquettes, LSP, de réseau privé virtuel, VPN, le procédé comprenant :
la réception (203), par un premier dispositif côté fournisseur, PE (110, 111), d'informations de protection envoyées par un deuxième dispositif, PE (120), les informations de protection comprenant un saut suivant virtuel, vNH ; et
le premier dispositif PE (110, 111) étant un dispositif PE de sortie et le deuxième dispositif PE (120) étant un dispositif PE d'entrée et les informations de protection comprenant en outre des informations d'indication d'identité qui sont utilisées pour indiquer qu'une identité du premier dispositif PE (110, 111) est un dispositif PE de sortie principal ou un dispositif PE de sortie secondaire ; et
l'envoi (204), par le premier dispositif PE (110, 111), d'un message d'établissement LSP VPN au deuxième dispositif PE (120), le message d'établissement LSP VPN étant utilisé pour ordonner d'établir un LSP VPN en utilisant le vNH comme un point d'extrémité.

2. Procédé selon la revendication 1, les informations de protection comprenant en outre une étiquette VPN principale, l'étiquette VPN principale étant une étiquette VPN allouée par un dispositif PE de sortie principal à une route destinée à un dispositif côté client, CE, de destination (101) ; et
le procédé comprenant en outre :
la détermination, par le premier dispositif PE (110, 111) sur la base des informations d'indication d'identité, que l'identité du premier dispositif PE (110, 111) est le dispositif PE de sortie secondaire ; et
l'établissement, par le premier dispositif PE (110, 111), d'une relation de corrélation entre une étiquette VPN secondaire et l'étiquette VPN principale, l'étiquette VPN secondaire étant une étiquette VPN allouée par le premier dispositif PE (110, 111) à la route destinée au CE de destination (101).

3. Procédé selon la revendication 2, l'établissement, par le premier dispositif PE (110, 111), d'une relation de corrélation entre une étiquette VPN secondaire et l'étiquette VPN principale comprenant :
la génération, par le premier dispositif PE (110, 111), d'une table de commutation d'étiquettes VPN, la table de commutation d'étiquettes VPN correspondant au vNH, une étiquette entrante dans la table de commutation d'étiquettes VPN étant l'étiquette VPN principale et une étiquette sortante dans la table de commutation d'étiquettes VPN étant l'étiquette VPN secondaire.

4. Procédé selon la revendication 2 ou 3, les informations d'indication d'identité comprenant une adresse de protocole Internet, IP, du dispositif PE de sortie secondaire ; et
la détermination, par le premier dispositif PE (110, 111) sur la base des informations d'indication d'identité, que le premier dispositif PE (110, 111) est le dispositif PE de sortie secondaire comprenant :
lors de la détermination que l'adresse IP du dispositif PE de sortie secondaire est la même qu'une adresse IP du premier dispositif PE (110, 111), la détermination, par le premier dispositif PE (110, 111), que le premier dispositif PE (110, 111) est le dispositif PE de sortie secondaire.

5. Procédé selon l'une quelconque des revendications 2 à 4, avant l'envoi, par le premier dispositif PE (110, 111), d'un message d'établissement LSP VPN au deuxième dispositif PE (120), le procédé comprenant en outre :
la détermination, par le premier dispositif PE (110, 111), d'une première valeur métrique, la première valeur métrique étant supérieure à une seconde valeur métrique, et la seconde valeur métrique étant déterminée par le dispositif PE de sortie principal ; et
l'annonce, par le premier dispositif PE (110, 111), de la première valeur métrique au deuxième dispositif PE (120).

6. Procédé selon l'une quelconque des revendications 1 à 5, avant la réception, par un premier dispositif PE (110, 111), des informations de protection envoyées par un deuxième dispositif PE (120), le procédé comprenant en outre :
l'envoi, par le premier dispositif PE (110, 111), d'au moins une adresse IP au deuxième dispositif PE, le vNH étant une adresse IP dans l'au moins une adresse IP.

7. Procédé pour établir un trajet commuté par étiquettes, LSP, de réseau privé virtuel, VPN, le procédé comprenant :
la détermination (201), par un deuxième dispositif côté fournisseur, PE (120), d'un saut suivant virtuel, vNH, le deuxième dispositif PE (120) étant un dispositif PE d'entrée ;
l'envoi (203), par le deuxième dispositif PE (120), des informations de protection à un premier dispositif PE (110, 111), le premier dispositif PE étant un dispositif PE de sortie,
les informations de protection comprenant le vNH et les informations d'indication d'identité qui sont utilisées pour indiquer qu'une identité du premier dispositif PE (110, 111) est un dispositif PE de sortie principal ou un dispositif PE de sortie secondaire ; et la réception (204), par le deuxième dispositif PE (120), d'un message d'établissement LSP VPN annoncé par le premier dispositif PE (110, 111), le message d'établissement LSP VPN étant utilisé pour ordonner d'établir un LSP VPN en utilisant le vNH comme un point d'extrémité.

8. Procédé selon la revendication 7, avant de déterminer, par un deuxième dispositif PE (120), un vNH, le procédé comprenant en outre :
la réception, par le deuxième dispositif PE (120), d'un premier ensemble d'adresses IP envoyé par le premier dispositif PE (110, 111), le premier ensemble d'adresses IP comprenant au moins une adresse IP ;
la réception, par le deuxième dispositif PE (120), d'un second ensemble d'adresses IP envoyé par un troisième dispositif PE de sortie (110, 111), le second ensemble d'adresses IP comprenant au moins une adresse IP ; et
la détermination, par le deuxième dispositif PE (120), d'un groupe d'adresses, le groupe d'adresses étant un ensemble d'intersection du premier ensemble d'adresses IP et du second ensemble d'adresses IP ; et
la détermination, par un deuxième dispositif PE (120), d'un vNH comprenant :
la détermination, par le deuxième dispositif PE (120), d'une adresse IP à partir du groupe d'adresses en tant que vNH.

9. Dispositif côté fournisseur PE (110, 111), le dispositif PE (110, 111) étant un dispositif PE de sortie et comprenant :
une unité de réception (401), configurée pour recevoir des informations de protection envoyées par un deuxième dispositif PE (120), le deuxième dispositif PE (120) étant un dispositif PE d'entrée, les informations de protection comprenant un saut suivant virtuel, vNH, et des informations d'indication d'identité qui sont utilisées pour indiquer qu'une identité du dispositif PE (110, 111) est un dispositif PE de sortie principal ou un dispositif PE de sortie secondaire ; et
une unité d'envoi (402), configurée pour envoyer un message d'établissement de trajet commuté par étiquettes, LSP, de réseau privé virtuel, VPN, au deuxième dispositif PE (120), le message d'établissement LSP VPN étant utilisé pour ordonner d'établir un LSP VPN en utilisant le vNH comme un point d'extrémité.

10. Dispositif PE (110, 111) selon la revendication 9, les informations de protection comprenant en outre une étiquette VPN principale, l'étiquette VPN principale étant une étiquette VPN allouée par un dispositif PE de sortie principal à une route destinée pour un dispositif côté client CE de destination (101) ; et
le dispositif PE (110, 111) comprend en outre une unité de traitement (403), configurée pour déterminer, sur la base des informations d'indication d'identité, que l'identité du dispositif PE (110, 111) est le dispositif PE de sortie secondaire, l'unité de traitement (403) étant en outre configurée pour établir une relation de corrélation entre une étiquette VPN secondaire et l'étiquette VPN principale, l'étiquette VPN secondaire étant une étiquette VPN allouée par le dispositif PE (110, 111) à la route destinée pour le CE de destination (101).

11. Dispositif PE (110, 111) selon la revendication 10, l'unité de traitement (403) étant spécifiquement configurée pour générer une table de commutation d'étiquettes VPN, la table de commutation d'étiquettes VPN correspondant au vNH, une étiquette entrante dans la table de commutation d'étiquettes VPN étant l'étiquette VPN principale, et une étiquette sortante dans la table de commutation d'étiquettes VPN étant l'étiquette VPN secondaire.

12. Dispositif PE (110, 111) selon la revendication 10 ou 11, les informations d'indication d'identité comprenant une adresse de protocole Internet, IP, du dispositif PE de sortie secondaire ; et
l'unité de traitement (403) est spécialement configurée pour : lors de la détermination que l'adresse IP du dispositif PE de sortie secondaire est la même qu'une adresse IP du dispositif PE (110, 111), déterminer que le dispositif PE (110, 111) est le dispositif PE de sortie secondaire.

13. Dispositif côté fournisseur PE (120), le dispositif PE (120) étant un dispositif PE d'entrée et comprenant :
une unité de traitement (501), configurée pour déterminer un saut suivant virtuel, vNH ; et
une unité d'envoi (502), configurée pour envoyer des informations de protection à un premier dispositif PE (110, 111), le premier dispositif PE étant un dispositif PE de sortie,
les informations de protection comprenant le vNH et les informations d'indication d'identité qui sont utilisées pour indiquer qu'une identité du premier dispositif PE (110, 111) est un dispositif PE de sortie principal ou un dispositif PE de sortie secondaire ; et une unité de réception (503), configurée pour recevoir un message d'établissement de trajet commuté par étiquettes, LSP, de réseau privé virtuel, VPN, annoncé par le premier dispositif PE (110, 111), le message d'établissement LSP VPN étant utilisé pour ordonner d'établir un LSP VPN en utilisant le vNH comme un point d'extrémité.
